(19) Europäisches Patentamt
European Patent Office
Office européen des brevets

(11) **EP 2 394 749 A1**

(12) **EUROPÄISCHE PATENTANMELDUNG**

(43) Veröffentlichungstag:
**14.12.2011 Patentblatt 2011/50**

(51) Int Cl.:
***B06B 1/06*** *(2006.01)*

(21) Anmeldenummer: **10165102.4**

(22) Anmeldetag: **07.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **ELMOS Semiconductor AG**
**44227 Dortmund (DE)**

(72) Erfinder: **Spiegel, Egbert**
**44227 Dortmund (DE)**

(74) Vertreter: **von Kreisler Selting Werner**
**Deichmannhaus am Dom**
**Bahnhofsvorplatz 1**
**50667 Köln (DE)**

(54) **Verfahren zur Erkennung einer Verschmutzung oder anderweitigen Funktionsstörung eines Ultraschallsensors einer Parkhilfe für ein Kraftfahrzeug**

(57) Bei dem Verfahren zur Erkennung einer Verschmutzung oder anderweitigen Funktionsstörung eines Ultraschallsensors einer Parkhilfe für ein Kraftfahrzeug wird der Ultraschallsensor alternierend in einem Sendemodus, in dem er Ultraschallwellen aussendet, und einem Empfangsmodus betrieben, in dem empfangene Ultraschallwellen detektiert werden können. Nach jedem Betrieb im Sendemodus wird die Eigenfrequenz des ausschwingenden Ultraschallsensors ermittelt, wobei der Ultraschallsensor während der Dauer der Ermittlung der Eigenfrequenz nicht angesteuert wird. Anhand einer Abweichung der ermittelten Eigenfrequenz von einem für den Nichtverschmutzungs- oder Nichtstörungsfall geltenden Referenzwert wird eine Verschmutzung bzw. eine Funktionsstörung des Sensors erkannt.

EP 2 394 749 A1

**Beschreibung**

Die Erfindung betrifft ein Verfahren zur Erkennung einer Verschmutzung oder anderweitigen Funktionsstörung eines Ultraschallsensors einer Parkhilfe für ein Kraftfahrzeug.

Ultraschallbetriebene Parkhilfen für Kraftfahrzeuge erfreuen sich einer zunehmenden Beliebtheit. Dabei werden Ultraschallsensoren eingesetzt, die alternierend in einem Sendemodus und einem Empfangsmodus betrieben werden. Im Sendemodus wird ein Ultraschall-Burst-Signal ausgesendet, das beispielsweise nach einer Reflektion an einem Hindernis in einem sich an den Sendemodus anschließenden Empfangsmodus vom Ultraschallsensor empfangen wird und in einer nachgeordneten Schaltung weiterverarbeitet wird. Auf Grund der Laufzeiten kann dann der Abstand eines Hindernisses zum Kraftfahrzeug ermittelt werden.

Ein gewisser Nachteil bekannter Systeme besteht darin, dass die Funktionsfähigkeit nicht angezeigt wird. Es hat sich aber herausgestellt, dass beispielsweise bereits Verschmutzungen durch Erdbodenreste (beispielsweise nach einer Geländefahrt) oder Vereisungen an den Ultraschallsensoren deren Funktiontüchtigkeit spürbar einschränken.

Aufgabe der Erfindung ist es daher, ein Verfahren zur Erkennung der Verschmutzung bzw. allgemein der Funktionsstörung eines Ultraschallsensors einer Parkhilfe für ein Kraftfahrzeug anzugeben.

Zur Lösung dieser Aufgabe wird mit der Erfindung ein Verfahren zur Erkennung einer Verschmutzung oder anderweitigen Funktionsstörung eines Ultraschallsensors einer Parkhilfe für ein Kraftfahrzeug vorgeschlagen, bei dem

- der Ultraschallsensor alternierend in einem Sendemodus, in dem er Ultraschallwellen aussendet, und einem Empfangsmodus betrieben wird, in dem empfangene Ultraschallwellen detektiert werden können,
- nach jedem Betrieb im Sendemodus die Eigenfrequenz des ausschwingenden Ultraschallsensors ermittelt wird, wobei der Ultraschallsensor während der Dauer der Ermittlung der Eigenfrequenz nicht angesteuert wird, und
- anhand einer Abweichung der ermittelten Eigenfrequenz von einem für den Nichtverschmutzungs- oder Nichtstörungsfall geltenden Referenzwert eine Verschmutzung bzw. eine Funktionsstörung des Sensors erkannt wird.

Sinngemäß wird also nach der Erfindung vorgeschlagen, eine Blockade bzw. Funktionsbeeinträchtigung oder Verschmutzung durch Messung der Eigenfrequenz des Ultraschallsensors nach dem Aussenden seines Sende-Burst-Signals und durch Vergleich mit einem Referenzwert zu erkennen.

Die Verschmutzung der Membran bewirkt eine Verschiebung der Resonanzfrequenz des Sensors. Nach dem Senden schwingt der Sensor auf Grund seiner hohen Güte für einige 100 μs nach. Die Messung dieser Frequenz ist ein gutes Kriterium für die Verschmutzung der Membran. Verschiebt sich diese Frequenz um mehr als 5% kann eine deutliche Verschlechterung der Empfangseigenschaften festgestellt werden, und zwar unabhängig von den bisher untersuchten Sensortypen. In diesem Bereich ist die Ausschwingdauer kein geeignetes Kriterium. Die Frequenzbestimmung beruht auf Auswertung der ADC-Daten mit 8 Abtastwerten pro Sendeperiode. Das Most Significant Bit (MSB) der ADC-Werte gibt das Vorzeichen des Signals an. Somit brauchen während der Frequenzmessung (Torzeit) nur die 0/1- bzw. 1/0-Übergänge des MBSs ausgewertet werden. Für eine möglichst hohe Genauigkeit werden nicht nur die Übergänge gezählt, sondern auch die Anzahl der Abtastwerte zwischen dem ersten und letzten Übergang während der Torzeit. Die Frequenz berechnet sich dann zu

$$f_{MESS} = 2 \bullet \frac{N_{ABTASTWERTE}}{N_{ÜBERGÄNGE}{-1}} \bullet \frac{f_{SENDE}}{8}$$

Die damit in der Praxis erzielbare Auflösung/Genauigkeit von ca. 0,7% ist für die Aufgabenstellung ausreichend. Andere, gegebenenfalls genauere Verfahren sind ebenfalls denkbar.

**Patentansprüche**

1. Verfahren zur Erkennung einer Verschmutzung oder anderweitigen Funktionsstörung eines Ultraschallsensors einer Parkhilfe für ein Kraftfahrzeug, bei dem

- der Ultraschallsensor alternierend in einem Sendemodus, in dem er Ultraschallwellen aussendet, und einem Empfangsmodus betrieben wird, in dem empfangene Ultraschallwellen detektiert werden können,

- nach jedem Betrieb im Sendemodus die Eigenfrequenz des ausschwingenden Ultraschallsensors ermittelt wird, wobei der Ultraschallsensor während der Dauer der Ermittlung der Eigenfrequenz nicht angesteuert wird, und

- anhand einer Abweichung der ermittelten Eigenfrequenz von einem für den Nichtverschmutzungs- oder Nichtstörungsfall geltenden Referenzwert eine Verschmutzung bzw. eine Funktionsstörung des Sensors erkannt wird.

Europäisches
Patentamt

European
Patent Office

Office européen
des brevets

**EUROPÄISCHER RECHERCHENBERICHT**

Nummer der Anmeldung

EP 10 16 5102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/001853 A1 (ADACHI HIDEO [JP] ET AL) 1. Januar 2009 (2009-01-01) * Absatz [0020] - Absatz [0063] * * Absatz [0110] - Absatz [0115] * * Absatz [0162] * ----- | 1 | INV. B06B1/06 |
| X | US 2006/167595 A1 (BREED DAVID S [US] ET AL) 27. Juli 2006 (2006-07-27) * Absatz [0270] * ----- | 1 | |
| X | US 2006/152112 A1 (SASAKI YASUHIRO [JP] SASAKI YASUHIRO [JP] ET AL) 13. Juli 2006 (2006-07-13) * Absatz [0122] - Absatz [0123] * ----- | 1 | |

| | | | RECHERCHIERTE SACHGEBIETE (IPC) |
|---|---|---|---|
| | | | B06B |

Der vorliegende Recherchenbericht wurde für alle Patentansprüche erstellt

| Recherchenort | Abschlußdatum der Recherche | Prüfer |
|---|---|---|
| München | 9. November 2010 | Marquart, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................

& : Mitglied der gleichen Patentfamilie, übereinstimmendes Dokument

EPO FORM 1503 03.82 (P04C03)

EP 2 394 749 A1

**ANHANG ZUM EUROPÄISCHEN RECHERCHENBERICHT**
**ÜBER DIE EUROPÄISCHE PATENTANMELDUNG NR.**  EP 10 16 5102

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2010

| Im Recherchenbericht angeführtes Patentdokument | Datum der Veröffentlichung | Mitglied(er) der Patentfamilie | Datum der Veröffentlichung |
|---|---|---|---|
| US 2009001853 A1 | 01-01-2009 | JP 2007229328 A<br>WO 2007099746 A1<br>US 2010201222 A1 | 13-09-2007<br>07-09-2007<br>12-08-2010 |
| US 2006167595 A1 | 27-07-2006 | KEINE | |
| US 2006152112 A1 | 13-07-2006 | CN 1823429 A<br>WO 2005024966 A1 | 23-08-2006<br>17-03-2005 |

EPO FORM P0461

Für nähere Einzelheiten zu diesem Anhang : siehe Amtsblatt des Europäischen Patentamts, Nr.12/82

5